# EUROPÄISCHE PATENTSCHRIFT

(11) **EP 2 179 211 B1**
(45) Veröffentlichungstag und Bekanntmachung des Hinweises auf die Patenterteilung: **21.09.2011**
(21) Anmeldenummer: 08749419.1
(22) Anmeldetag: 09.05.2008
(51) Int. Cl.: F16L 37/098

(54) **FLUIDLEITUNGSKUPPLUNG**
FLUID LINE COUPLING
RACCORD DE CONDUITE DE FLUIDE

(30) Priorität: 11.07.2007 DE 102007032324
(43) Veröffentlichungstag der Anmeldung: 28.04.2010
(73) Patentinhaber: A. Raymond et Cie, 38000 Grenoble (FR)
(72) Erfinder: TAKENAKA, Yasuki, Fujisawa-City 251-0043 (JP); OGAWA, Mamoru, Isehara-City 259-1145 (JP); YOKOO, Norio, Atsugi-City 243-0021 (JP)
(74) Vertreter: Rüttgers, Joachim
(86) Internationale Anmeldenummer: PCT/EP2008/003746
(87) Internationale Veröffentlichungsnummer: WO 2009/006962

(56) Entgegenhaltungen:
- FR-A- 2 673 699
- US-A- 4 681 350
- US-A- 5 342 099

## Beschreibung

Die Erfindung betrifft eine Fluidleitungskupplung gemäß dem Oberbegriff des Patentanspruches 1.

Eine derartige Fluidleitungskupplung ist aus US-A-4,681,350 oder DE 196 19 026 A1 bekannt, die über ein Aufnahmeteil und über ein mit dem Aufnahmeteil verbindbares Verriegelungsteil verfügt. An dem Verriegelungsteil ist eine Anzahl von elastisch federnden Federzungen ausgebildet, die zum Hintergreifen eines Ringbundes eingerichtet sind, der an einem in das Aufnahmeteil einzufügenden Einsteckteil ausgebildet ist, um das Einsteckteil in diesem Fall unlösbar in dem Aufnahmeteil zu halten.

Der Erfindung liegt die Aufgabe zugrunde, eine Fluidleitungskupplung der eingangs genannten Art anzugeben, die sich insbesondere bei einer lösbaren Verbindung zwischen dem Aufnahmeteil und dem Einsteckteil durch eine sehr hohe Auszugskraft des Einsteckteiles aus dem Aufnahmeteil auszeichnet, wenn die Federzungen den Ringbund hintergreifen.

Diese Aufgabe wird bei einer Fluidleitungskupplung der eingangs genannten Art erfindungsgemäß mit den kennzeichnenden Merkmalen des Patentanspruches 1 gelöst.

Dadurch, dass bei der erfindungsgemäßen Fluidleitungskupplung ein gegenüber dem Aufnahmeteil verschiebbares Sicherungsteil vorhanden ist, das in einer Sicherungsstellung im Zusammenwirken von den an dem Sicherungsteil ausgebildeten Federzungen und von an dem Sicherungsteil ausgebildeten Sicherungsarmen eine Bewegung der Federzungen nach außen blockiert oder wenigstens behindert, können sich die Federzungen in der Sicherungsstellung des Sicherungsteiles nicht ohne weiteres nach außen bewegen und verbleiben selbst bei hohen Auszugskräften zuverlässig in der Hintergriffsstellung.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Explosionsansicht ein Ausfüh- rungsbeispiel einer erfindungsgemäßen Fluidlei- tungskupplung mit einem Aufnahmeteil und mit einem Si- cherungsteil,
- Fig. 2: in einer perspektivischen Ansicht das Ausführungsbeispiel gemäß Fig. 1 mit dem Sicherungsteil in einer Freigabestel- lung,
- Fig. 3: in einem Längsschnitt das Ausführungsbeispiel gemäß Fig. 1 in der Freigabestellung gemäß Fig. 2 und
- Fig. 4: in einem Längsschnitt das Ausführungsbeispiel gemäß Fig. 1 mit dem Sicherungsteil in einer Sicherungsstellung.

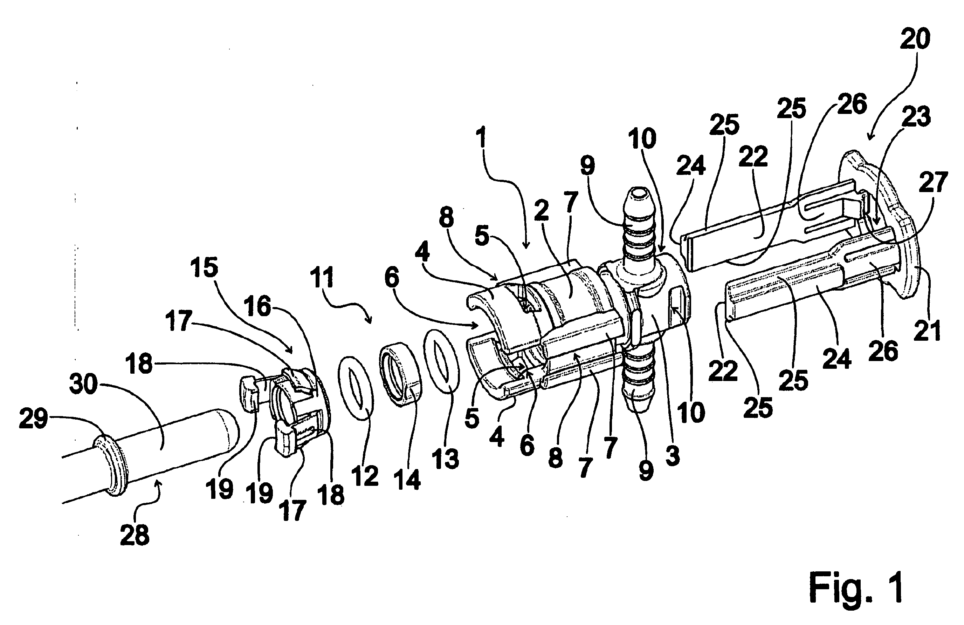

Fig. 1 zeigt in einer perspektivischen Explosionsansicht ein Ausführungsbeispiel einer erfindungsgemäßen Fluidleitungskupplung mit einem aus einem hartelastischen Kunststoffmaterial hergestellten Aufnahmeteil 1, das über einen hohlzylinderartigen Aufnahmekörper 2 und über einen an den Aufnahmekörper 2 angesetzten Anschlusskörper 3 verfügt.

An den Aufnahmekörper 2 sind auf der dem Anschlusskörper 3 abgewandten Seite zwei einander gegenüberliegende, schalenförmige Stirnschalen 4 angeformt, die sich in Längsrichtung des Aufnahmekörpers 2 von dem Anschlusskörper 3 wegweisend erstrecken und jeweils eine Rastzungenaufnahmefreimachung 5 aufweisen. Zwischen den umfänglich aufeinander zu weisenden Randseiten der Stirnschalen 4 ist jeweils ein Federzungenaufnahmeraum 6 ausgebildet, wobei sich die Federzungenaufnahmeräume 6 diametral einander gegenüberliegen. Weiterhin sind an dem Aufnahmekörper 2 in Verlängerung der beiden Federzungenaufnahmeräume 6 in Längsrichtung jeweils ein Paar von einander gegenüberliegenden, sich in Längsrichtung des Aufnahmeteiles 1 erstreckenden länglichen Randschienen 7 als Führungsmittel des Aufnahmeteiles 1 angeformt, die jeweils mit einem überkragenden Teil einen Oberflächenbereich des Aufnahmeteiles 1 überdecken und zwischen denen ein Führungsstegaufnahmeraum 8 ausgebildet ist.

An dem Anschlusskörper 3 sind bei dem in Fig. 1 dargestellten Ausführungsbeispiel zwei sich in entgegengesetzte Richtungen erstreckende, fluchtend miteinander ausgerichtete Anschlussstutzen 9 angesetzt, an die Enden von in Fig. 1 nicht dargestellten Fluidleitungen anschließbar sind. Weiterhin lässt sich Fig. 1 entnehmen, dass an dem Anschlusskörper 3 in dem von dem Aufnahmekörper 2 wegweisenden Endbereich in Verlängerung der Federzungenaufnahmeräume 6 sowie der Führungsstegaufnahmeräume 8 zwei diametral einander gegenüberliegende Haltenuten 10 als Haltemittel des Aufnahmeteiles 1 ausgebildet sind.

Weiterhin verfügt die Fluidleitungskupplung bei dem Ausführungsbeispiel gemäß Fig. 1 über eine Dichtungsanordnung 11, die einen ersten weichelastischen Dichtungsring 12, einen zweiten weichelastischen Dichtungsring 13 und einen zwischen den Dichtungsringe 12, 13 angeordneten hartelastischen Zwischenring 14 aufweist. Die Dichtungsringe 12, 13 und der Zwischenring 14 sind in den Aufnahmekörper 2 einfügbar.

Die Fluidleitungskupplung gemäß dem Ausführungsbeispiel von Fig. 1 ist weiterhin mit einem aus einem hartelastischen Kunststoffmaterial gefertigten Verriegelungsteil 15 ausgestattet, das über einen Ringkörper 16 verfügt. An dem Ringkörper 16 sind zum einen zwei einander diametral gegenüberliegende, in die Rastzungenaufnahmefreimachungen 5 einfügbare Rastzungen 17 und zum anderen zwischen den Rastzungen 17 zwei ebenfalls einander diametral gegenüberliegende, in die Federzungenaufnahmefreimachungen 6 einfügbare Federzungen 18 angeformt, wobei sich die Rastzungen 17 und die Federzungen 18 in ihrer jeweiligen Ruhestellung auf einer Seite des Ringkörper 16 erstrecken und schräg nach radial außen über den Ringkörper 16 überstehen. An den freien Enden jeder Federzunge 18 ist jeweils eine nach radial innen vorstehende Verriegelungsnase 19 ausgebildet.

Weiterhin verfügt die erfindungsgemäße Fluidleitungskupplung über ein aus einem hartelastischen Kunststoffmaterial gefertigtes Sicherungsteil 20, das bei dem Ausführungsbeispiel gemäß Fig. 1 eine flache Endplatte 21 aufweist. An der Endplatte 21 sind diametral einander gegenüberliegende längliche Sicherungsarme 22 angeformt, die sich in einer Richtung von der Endplatte 21 weg erstrecken. Bei dem erläuterten Ausführungsbeispiel weist die Endplatte 21 eine mittige Anschlusskörperfreimachung 23 auf und steht radial über die Sicherungsarme 22 vor.

Jeder Sicherungsarm 22 ist an seinen von der Endplatte 21 wegweisenden Enden außenseitig mit einem mittig angeordneten sowie erhabenen Führungssteg 24 und beidseitig jedes Führungssteges 24 mit gegenüber dem Führungssteg 24 dünneren Randstreifen 25 als Führungsmittel des Sicherungsteiles 20 ausgebildet.

Weiterhin weist jeder Sicherungsarm 22 auf seiner der Endplatte 21 zugewandten Seite eine sich in Richtung der Endplatte 21 erstreckende federnde Haltezunge 26 auf, die an ihren der Endplatte 21 zugewandten freien Enden jeweils eine Haltenase 27 tragen, die sich radial nach innen erstrecken und aufeinander zu weisen.

Schließlich ist in Fig. 1 ein längliches, im wesentlichen zylinderförmiges Einsteckteil 28 dargestellt, das einen umlaufenden erhabenen Ringbund 29 trägt und mit einem sich endseitig verjüngenden Einsteckschaft 30 in den Aufnahmekörper 2 des Aufnahmeteiles 1 einzufügen ist, um eine Verbindung zwischen einer den Anschlussstutzen 9 angeschlossenen, in Fig. 1 nicht dargestellten Fluidleitungen und einer in Fig. 1 ebenfalls nicht dargestellten weiteren, mit dem Einsteckteil 28 verbundenen Fluidleitung herzustellen.

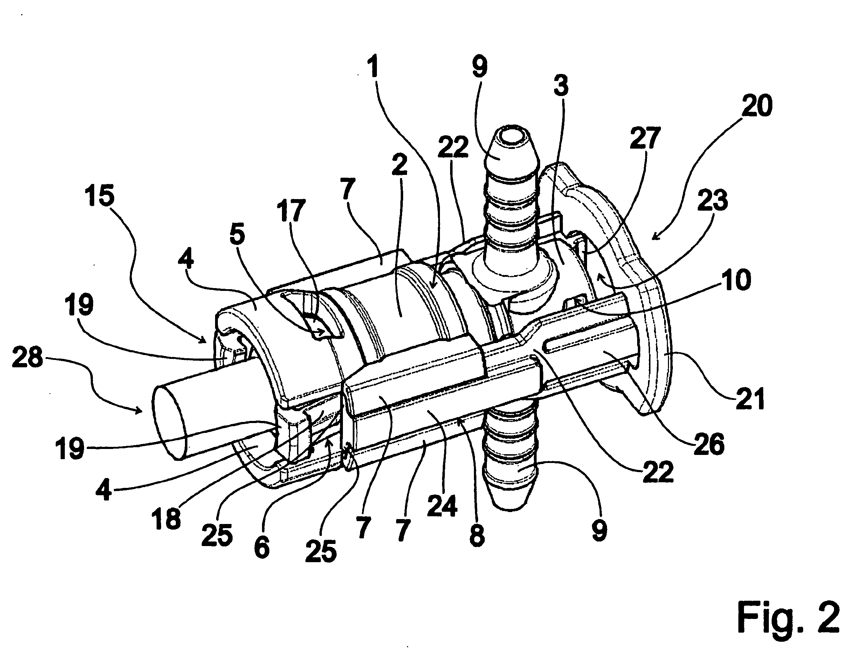

Fig. 2 zeigt in einer perspektivischen Ansicht das Ausführungsbeispiel gemäß Fig. 1 in zusammengefügter Anordnung des Aufnahmeteiles 1, der in der Darstellung gemäß Fig. 2 von dem Aufnahmeteil 1 eingeschlossenen und daher nicht sichtbaren Dichtungsanordnung 11, des von den Stirnschalen 4 umschlossenen Verriegelungsteiles 15, des auf das Aufnahmeteil 1 aufgeschobenen Sicherungsteiles 20 und des in das Aufnahmeteil 1 eingeschobenen Einsteckteiles 28 mit dem Sicherungsteil in einer Freigabestellung, in der die Sicherungsarme 22 so weit zwischen die jeweils einander gegenüberliegenden Randschienen 7 eingeschoben worden sind, dass die von der Endplatte 21 wegweisenden Enden der Sicherungsarme 22 nahe den Federzungen 18 angeordnet sind, ohne diese jedoch nach Möglichkeit zu berühren oder höchstens allenfalls so weit radial nach innen zu drücken, dass der Ringbund 29 im wesentlichen behinderungsfrei an den Verriegelungsnasen 19 vorbeitreten kann. Weiterhin ist aus Fig. 2 ersichtlich, dass die Randstreifen 25 durch den überkragenden Teil der Randschienen 7 überdeckt und die Führungsstege 24 in den Führungsstegaufnahmeräumen 8 angeordnet sind, um eine gute Führung und insbesondere gegen Verbiegen stabile Lagerung der Sicherungsarme 22 des Sicherungsteiles 20 an dem Aufnahmeteil 1 sicherzustellen.

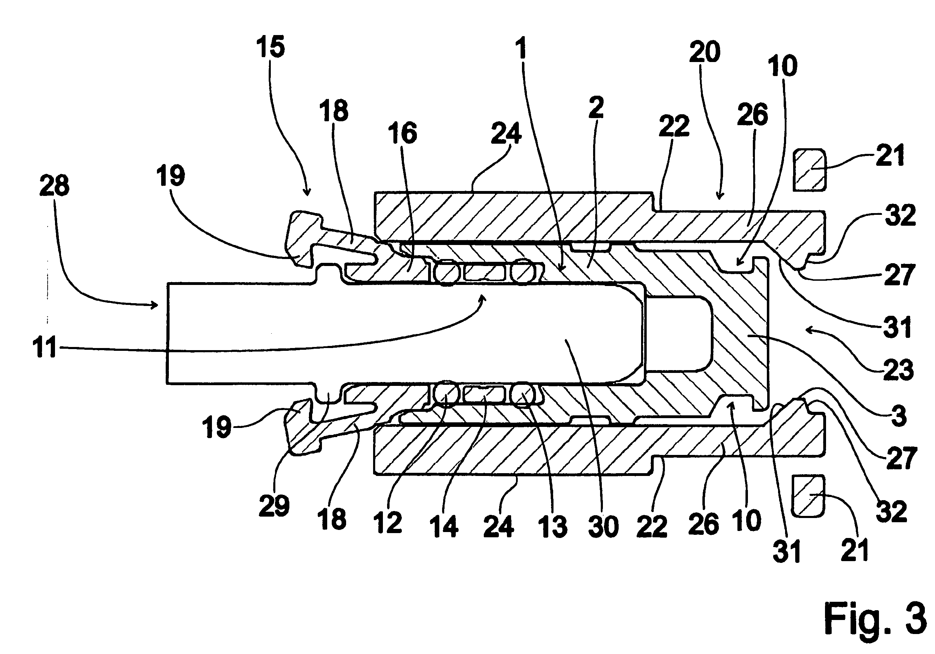

Fig. 3 zeigt in einem Längsschnitt das Ausführungsbeispiel gemäß Fig. 1 in der Freigabestellung gemäß Fig. 2. Aus Fig. 3 ist ersichtlich, dass sich die Randschienen 7 bis zu dem Verriegelungsteil 15 erstrecken und in der Freigabestellung die Sicherungsarme 22 vorzugsweise gerade bis an die in einer relaxierten Ruhestellung schräg radial nach außen aufstellten Federzungen 18 heranragen, ohne sie jedoch radial nach innen zu bewegen, so dass beim Einführen des Einsteckteiles 28 in das Aufnahmeteil 1 der Ringbund 29 berührungsfrei oder zumindest im wesentlichen behinderungsfrei an den Verriegelungsnasen 19 vorbeitreten kann.

Weiterhin lässt sich Fig. 3 entnehmen, dass die Haltenasen 27 jeweils eine den Sicherungsarme 22 zugewandte, verhältnismäßig flach angestellte Aufschiebflanke 31 und eine den Sicherungsarmen 22 abgewandte, verhältnismäßig steil angestellte Abziehflanke 32 aufweisen. Weiterhin ist aus Fig. 3 ersichtlich, dass bei diesem Ausführungsbeispiel die Haltenasen 27 in der Freigabestellung in einem gewissen Abstand von dem Anschlusskörper 3 angeordnet sind, so dass das Sicherungsteil 20 gegenüber dem Aufnahmeteil 1 frei verschiebbar ist und bei Bedarf von dem Aufnahmeteil 1 abgezogen werden kann.

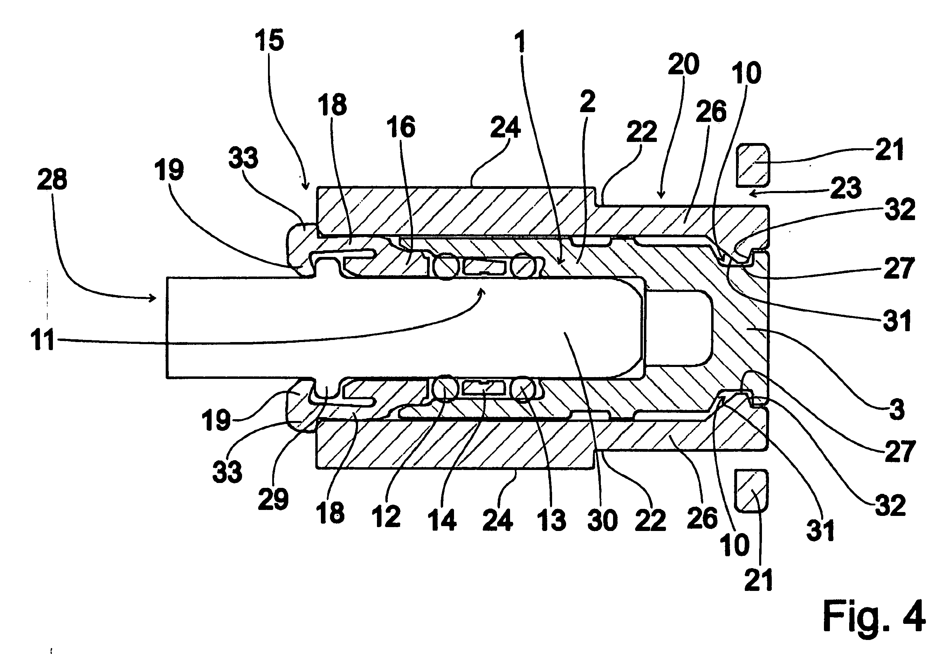

Fig. 4 zeigt in einem Längsschnitt das Ausführungsbeispiel gemäß Fig. 1 mit dem Sicherungsteil 20 in einer gegenüber der Freigabestellung gemäß Fig. 2 und der Fig. 3 vorgeschobenen Sicherungsstellung, in der gegenüber der Freigabestellung gemäß Fig. 2 und Fig. 3 das Sicherungsteil 20 soweit auf das Aufnahmeteil 1 aufgeschoben worden ist, dass der Anschlusskörper 3 in der Anschlusskörperfreimachung 23 angeordnet ist, wobei die Sicherungsarme 22 zum Erzielen einer hohen Biegesteifigkeit lediglich mit einem verhältnismäßig kurzen Abschnitt aus den weit vorgezogenen Randschienen 7 austreten und an den Außenseiten der Federzungen 18 aufliegen sowie diese so weit radial nach innen gedrückt haben, so dass die Verriegelungsnasen 19 den Ringbund 29 hintergreifen und die nach radial innen gewandten Stirnseiten an dem Einsteckteil 28 anliegen. Weiterhin liegen in der Sicherungsstellung bei diesem Ausführungsbeispiel die Stirnseiten der von der Endplatte 21 abgewandten Enden der Sicherungsarme 22 an als Anschlag dienenden Abschlusshöckern 33 an, die an den freien Enden der Federzungen 18 angeformt sind und nach radial außen über die Federzungen 18 überstehen.

Weiterhin lässt sich Fig. 4 entnehmen, dass beim Übergang von der Freigabestellung gemäß Fig. 2 und Fig. 3 in die Sicherungsstellung gemäß Fig. 4 nach einem mit einem relativ geringen Kraftaufwand erfolgenden Aufreiten der Aufschiebflanken 31 an dem Aufnahmekörper 3 die Haltenasen 27 in den Haltnuten 10 angeordnet sind, so dass das Sicherungsteil 20 gegen ein unbeabsichtigtes Bewegen aus der Sicherungsstellung heraus gesichert ist. Erst ab einem gezielten Einwirken auf die Endplatte 21 mit einem relativ hohen Kraftaufwand zum Überwinden eines durch die steilen Abziehflanken 32 entgegengesetzten Haltewiderstandes lässt sich das Sicherungsteil 20 von dem Aufnahmeteil 1 abziehen, um das Einsteckteil 28 nach Lösen des Hintergriffs der Verriegelungsnasen 19 durch Auffedern der Federzungen 18 nach radial außen wieder freizugeben. Somit ist das Einsteckteil 28 mit einer sehr hohen Auszugskraft gegen Herausziehen aus dem Aufnahmeteil 1 gesichert.

## Patentansprüche

1. Fluidleitungskupplung mit einem Aufnahmeteil (1) und mit einem mit dem Aufnahmeteil (1) verbindbaren Verriegelungsteil (15), an dem eine Anzahl von elastisch federnden Federzungen (18) ausgebildet ist, die zum Hintergreifen eines an einem in das Aufnahmeteil (1) einzufügenden Einsteckteil (28) ausgebildeten Ringbund (29) eingerichtet sind, **dadurch gekennzeichnet, dass** ein Sicherungsteil (20) vorhanden ist, an dem eine der Anzahl der Federzungen (18) entsprechende Anzahl von länglichen Sicherungsarmen (22) ausgebildet ist, dass an dem Sicherungsteil (20) und an dem Aufnahmeteil (1) Führungsmittel (7; 24, 25) ausgebildet sind, die zum Verschieben des Sicherungsteiles (20) in Bezug auf das Aufnahmeteil (1) miteinander in Eingriff sind, und dass in einer Sicherungsstellung des Sicherungsteiles (20) jeder Sicherungsarm (22) außenseitig an einer ihm zugeordneten Federzunge (18) anliegt.

2. Fluidleitungskupplung nach Anspruch 1, **dadurch gekennzeichnet, dass** die Federzungen (18) in einer Ruhestellung so weit nach außen abstehen, dass der Ringbund (29) berührungsfrei in das Aufnahmeteil (1) eintreten kann und dass die Sicherungsarme (22) die Federzungen (18) in der Sicherungsstellung in einer Hintergriffsstellung halten.

3. Fluidleitungskupplung nach Anspruch 1 oder nach Anspruch 2, **dadurch gekennzeichnet, dass** das Sicherungsteil (22) über Rastzungen (17) unlösbar mit dem Aufnahmeteil (1) verbindbar ist, wobei die Rastzungen (1) in der unlösbaren Anordnung in in dem Aufnahmeteil (1) ausgebildeten Rastzungenaufnahmefreimachungen (5) eingreifen.

4. Fluidleitungskupplung nach einem der Ansprüche 1 bis 3, **dadurch gekennzeichnet, dass** die an dem Aufnahmeteil (1) ausgebildeten Führungsmittel paarweise einander gegenüberliegende, einen Oberflächenbereich des Aufnahmeteiles (1) überkragende Randschienen (7) und die an dem Sicherungsteil (20) ausgebildeten Führungsmittel außenseitig an den Sicherungsarmen (22) ausgebildete, erhabene Führungsstege (24) und beidseitig der Führungsstege (24) angeordnete Randstreifen (25) sind, wobei im Eingriff der Führungsmittel die Führungsstege (24) zwischen einander gegenüberliegenden Randschienen (7) angeordnet und die Randstreifen (25) von dem überkragenden Teil der Randschienen (7) überdeckt sind.

5. Fluidleitungskupplung nach einem der Ansprüche 1 bis 4, **dadurch gekennzeichnet, dass** das Sicherungsteil (20) und das Aufnahmeteil (1) Haltemittel (10; 26, 27) aufweisen, die in der Sicherungsstellung des Sicherungsteiles (20) miteinander in Eingriff sind und das Sicherungsteil (20) mit einem Haltewiderstand in der Sicherungsstellung halten.

6. Fluidleitungskupplung nach Anspruch 5, **dadurch gekennzeichnet, dass** die an dem Sicherungsteil (20) ausgebildeten Haltemittel federnde Haltezungen (26) sind, die jeweils eine endseitige, nach innen weisende Haltenase (27) aufweisen, und dass die an dem Aufnahmeteil (1) ausgebildeten Haltemittel über wenigstens eine Haltenut (10) verfügen, in die die Haltenasen (27) in der Sicherungsstellung eingreifen.

7. Fluidleitungskupplung nach einem der Ansprüche 1 bis 6, **dadurch gekennzeichnet, dass** die Sicherungsarme (22) an eine randseitig wenigstens abschnittsweise über die Sicherungsarme (22) überstehende-Endplatte (21) angeformt sind.

## Claims

1. Fluid line coupling with a receiving part (1) and with a locking part (15) which can be connected with the receiving part (1), on which a number of elastically yielding spring tabs (18) are formed which are designed to engage behind an annular collar (29) formed on an insertion part (28) which is to be inserted in the receiving part (1), **characterised in that** a securing part (20) is provided on which a number of longitudinal securing arms (22) corresponding to the number of spring tabs (18) are formed, that guide means (7; 24, 25) are formed on the securing part (20) and on the receiving part (1) which engage together to displace the securing part (20) in relation to the receiving part (1), and that, when the securing part (20) is in a securing position, each securing arm (22) rests, on its outer side, against a spring tab (18) associated with it.

2. Fluid line coupling according to claim 1, **characterised in that**, in a resting position, the spring tabs (18) project so far outwards that the annular collar (29) can be inserted in the receiving part (1) without making contact and that, in the securing position, the securing arms (22) hold the spring tabs (18) in a position in which they engage behind.

3. Fluid line coupling according to claim 1 or according to claim 2, **characterised in that** the securing part (22) can be connected inseparably with the receiving part (1) by means of snap-in tabs (17) such that, in the inseparable arrangement, the snap-in tabs (1) engage in cut-outs (5) for the snap-in tabs formed in the receiving part (1).

4. Fluid line coupling according one of the claims 1 to 3, **characterised in that** the guide means formed on the receiving part (1) are edge rails (7) arranged in pairs opposite one another, overhanging a surface area of the receiving part (1), and the guide means formed on the securing part (20) are raised guide bars (24) formed on the outer side of the securing arms (22) and edge strips (25) arranged on both sides of the guide bars (24), such that when the guide means are engaged the guide bars (24) are arranged between opposing edge rails (7) and the edge strips (25) are covered by the overhanging part of the edge rails (7).

5. Fluid line coupling according one of the claims 1 to 4, **characterised in that** the securing part (20) and the receiving part (1) possess retaining means (10; 26, 27) which engage together when the securing part (20) is in its securing position and hold the securing part (20) in the securing position with a holding resistance.

6. Fluid line coupling according to claim 5, **characterised in that** the retaining means formed on the securing part (20) are resilient retaining tongues (26) which each possess an inwards-pointing retaining nose (27) on the end, and that the retaining means formed on the receiving part (1) possess at least one retaining groove (10) into which the retaining noses (27) engage in the securing position.

7. Fluid line coupling according one of the claims 1 to 6, **characterised in that** the securing arms (22) are moulded onto an end plate (21) projecting at the edges, at least in sections, beyond the securing arms (22).

## Revendications

1. Raccord pour conduite véhiculant un fluide, comprenant un élément femelle formant logement d'insertion (1) et un élément de verrouillage en position (15), destiné à être inséré en correspondance d'accouplement avec l'élément femelle (1), qui est muni d'un certain nombre de languettes élastiques (18) qui sont agencées pour venir cramponner par derrière une collerette annulaire (29) dont est muni un élément embrochable mâle (28) destiné à être emmanché dans l'élément femelle formant logement d'insertion (1), **caractérisé en ce qu'**il est prévu un élément d'immobilisation en position (20) qui est pourvu d'un nombre de pattes de blocage en position de forme allongée (22) correspondant au nombre de languettes élastiques (18), **en ce qu'**au niveau de l'élément d'immobilisation en position (20) et de l'élément femelle formant logement d'insertion (1) il est prévu des organes de guidage (7 ; 24, 25) qui sont en prise d'engagement réciproque pour déplacer l'élément d'immobilisation en position (20) par rapport à l'élément femelle formant logement d'insertion (1) et **en ce que** dans la position d'immobilisation en position de l'élément d'immobilisation en position (20), chaque patte de blocage en position (22) se trouve, au niveau de sa face extérieure, en contact d'application contre la languette élastique (18) qui lui correspond.

2. Raccord pour conduite véhiculant un fluide selon la revendication 1, **caractérisé en ce que** les languettes élastiques (18) font, dans leur position de repos, saillie vers l'extérieur dans une proportion telle que la collerette annulaire (29) peut librement pénétrer dans l'élément femelle formant logement d'insertion (1) et **en ce que** les pattes de blocage en position (22) maintiennent, dans la position d'immobilisation en position, les languettes élastiques (18) dans leur position de cramponnement par derrière.

3. Raccord pour conduite véhiculant un fluide selon la revendication 1 ou selon la revendication 2, **caractérisé en ce que** l'élément d'immobilisation en position (20) est destiné à être mis en liaison d'accouplement de manière indissociable avec l'élément femelle formant logement d'insertion (1) par l'intermédiaire de languettes d'accrochage (17), les languettes d'accrochage (17) étant en l'occurrence, dans la position d'assemblage indissociable, engagées en prise d'encastrement dans des dégagements de réception de languettes d'accrochage (5) ménagés dans l'élément femelle formant logement d'insertion (1).

4. Raccord pour conduite véhiculant un fluide selon l'une des revendications 1 à 3, **caractérisé en ce que** les organes de guidage dont est muni l'élément femelle formant logement d'insertion (1) se présentent sous la forme d'un couple de glissières de guidage (7) à disposition diamétralement opposée faisant saillie au-dessus d'une portion de la surface de l'élément femelle formant logement d'insertion (1) et **en ce que** les organes de guidage dont est muni l'élément d'immobilisation en position (20) se présentent sous la forme de nervures de guidage convexes (24) disposées sur la face extérieure de l'élément d'immobilisation en position (20) et de bandes de rive (25) disposées de part et d'autre des nervures de guidage (24), agencement dans lequel, lorsque les organes de guidage sont en prise d'encastrement réciproque, les nervures de guidage (24) sont disposées entre les glissières de guidage (7) respectivement opposées et les bandes de rive (25) sont recouvertes par la portion formant saillie des glissières de guidage (7).

5. Raccord pour conduite véhiculant un fluide selon l'une des revendications 1 à 4, **caractérisé en ce que** l'élément d'immobilisation en position (20) et l'élément femelle formant logement d'insertion (1) comportent des organes de retenue (10 ; 26, 27), qui sont respectivement en prise d'engagement réciproque dans la position d'immobilisation en position de l'élément d'immobilisation en position (20) et qui maintiennent l'élément d'immobilisation en position (20) dans la position d'immobilisation en position en exerçant pour ce faire une résistance de retenue.

6. Raccord pour conduite véhiculant un fluide selon la revendication 5, **caractérisé en ce que** les organes de retenue dont est muni l'élément d'immobilisation en position (20) se présentent sous la forme de languettes de retenue élastiques (26), qui comportent respectivement, au niveau de leur portion d'extrémité, un ergot de retenue (27) orienté vers l'intérieur et ne ce que les organes de retenue dont est muni l'élément femelle formant logement d'insertion (1) présentent au moins une rainure de retenue (10) dans laquelle les ergots de retenue (27) viennent en prise d'engagement dans la position d'immobilisation en position.

7. Raccord pour conduite véhiculant un fluide selon l'une des revendications 1 à 6, **caractérisé en ce que** les pattes de blocage en position (22) comportent, au niveau de leur portion de rive, solidaire de celles-ci par moulage une plaquette d'extrémité (21) faisant saillie au moins en partie au-dessus des pattes de blocage en position (22).
